# EUROPEAN PATENT APPLICATION

(11) **EP 2 124 160 A1**
(43) Date of publication of application: **25.11.2009**
(21) Application number: 08156461.9
(22) Date of filing: 19.05.2008
(51) Int. Cl.: G06F 17/30

(54) **Method and device for optimising a set of recommendations**

(71) Applicant: Nederlandse Organisatie voor toegepast-natuurwetenschappelijk onderzoek TNO, 2628 VK Delft (NL)
(72) Inventor: De Wit, Joost Jelmer, 2273 XP Voorburg (NL)
(74) Representative: Hatzmann, Martin

(57) **Abstract**

A device for optimising a set of recommendations to at least one user comprises a processing unit and a memory unit. The processing unit is arranged for:
• presenting the set of recommendations to the user,
• receiving feedback on the set from the user, and
• adjusting the set by using the feedback,
The set has collective properties pertaining to the set as a whole, and adjusting the set involves comparing the feedback with at least two collective properties so as to determine which collective properties are important to the user.

## Description

The present invention relates to a method and device for optimising recommendations to a user. More in particular, the present invention relates to a method and device for optimising a set of recommendations to at least one user.

It is known to present recommendations to a user, based upon assumed or detected user preferences. Typically, the recommendations are checked for accuracy only: how accurately do the recommendations reflect the user's preferences.

The paper "Improving Recommendation Lists Through Topic Diversification" by Ziegler et al., WWW 2005 Conference, Chiba, Japan, May 2005, suggests to use diversity as an alternative to accuracy when making recommendation lists. Ziegler's paper focuses on diversity as an alternative to accuracy, and on accuracy versus satisfaction. However, the dimensions suggested by Ziegler are limited and the maximum user satisfaction that can be achieved by Ziegler's method is limited.

It is an object of the present invention to overcome these and other problems of the Prior Art and to provide a device and method for optimising a set of recommendations, which device and method yield a higher user satisfaction and are therefore more efficient.

Accordingly, the present invention provides a device for optimising a set of recommendations to at least one user, the device comprising a processing unit and a memory unit, wherein the processing unit is arranged for:
- presenting the set of recommendations to the user,
- receiving feedback on the set from the user, and
- adjusting the set by using the feedback,
wherein the set has collective properties pertaining to the set as a whole, and wherein adjusting the set involves comparing the feedback with at least two collective properties so as to determine which collective properties are important to the user.

By using collective properties pertaining to the set as a whole, a higher user satisfaction may be obtained. By comparing the feedback with at least two collective properties, concentrating on a single property only is avoided and again a higher user satisfaction is achieved.

In preferred embodiments, at least three collective properties are used, thus achieving an even higher user satisfaction.

In summary, the present invention seeks to optimise user satisfaction, in particular by "learning", that is, by adjusting the set of recommendations using the feedback from the user(s). While the collective satisfaction of a group of users may be optimised, it is preferred that the satisfaction of individual users is optimized. User satisfaction is optimised by determining which properties (of items) are important to the user.

The feedback may comprise implicit feedback, that is feedback which is determined by the user's responses to the set or to certain recommendations. For example, if the user skips a recommended item, it can be concluded that the recommendation was not optimal. Additionally, or alternatively, the feedback may comprise explicit feedback: the user may state his approval or disapproval of a certain recommendation or set of recommendations. Hybrid feedback comprises both explicit and implicit feedback.

Explicit feedback may be carried out by the user scoring the sets of recommendations: the user provides a score (for example, between 1 - very unsatisfactory - to 5 - highly satisfactory) which expresses her satisfaction with the set (or list) of recommendations. The scores indicate which properties are appreciated by the user and which are less or not appreciated.

The set of recommendations may be constituted by a playlist and consist of songs or video items which can be rendered by a suitable audio and/or video device. Advantageously, the optimising device of the present invention may be incorporated in a consumer device, such as an MP3 player, a CD player, a DVD player or a hard disc recorder.

In an advantageous embodiment, the recommendations are made to multiple users and the feedback may be received from multiple users.

The collective properties may include at least one of: accuracy, novelty, coverage, serendipity, diversity, and overlap.

The recommendations may concern audio and/or video clips, films, books, routes, CDs, DVDs, TV programs, musicals and/or plays.

The present invention further provides an entertainment system, comprising a device as defined above. The entertainment system may further comprise a server arranged for uploading recommended content.

The present invention also provides a method of optimising a set of recommendations to at least one user, the method comprising the steps of:
- presenting the set of recommendations to the user,
- receiving feedback on the set from the user, and
- adjusting the set by using the feedback,
wherein the set has collective properties pertaining to the set as a whole, and wherein the adjusting step involves comparing the feedback with at least two collective properties so as to determine which collective properties are important to the user.

The feedback may comprise implicit feedback and/or explicit feedback. Hybrid feedback includes both implicit and explicit feedback.

The present invention additionally provides a computer program product for carrying out the method as defined above. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

The present invention preferably involves a feedback loop in which items are fed to a recommendation set generator, which generates recommendations sets using the items, their properties, and user preferences. Conventionally, these user preferences pertain to the recommended items only, but in the present invention these preferences may additionally, or exclusively, pertain to the sets of recommendations.

The sets of recommendations generated by the recommendation set generator are fed to one or more users. These users generate feedback, which may be active feedback in response to questions, passive feedback in response to user behaviour (e.g. switching off a device which offers the recommendations), or hybrid involving both active and passive feedback. In accordance with the present invention, the user effectively determines which properties of the set of recommendations as a whole are important to her. The user feedback is fed to the recommendation set generator which adjusts, if necessary, the properties appreciated by the user and compiles the next set of recommendations using the adjusted set of properties. Accordingly, a set of recommendations is produced using a set of collective properties which is based upon user feedback.

The (user) feedback may be grouped per criterion and is used to improve and optimize the set of recommendations. In addition to feedback pertaining to the set of recommendations, the user may produce (active and/or passive) feedback pertaining to individual items.

The set (or list) of recommendations may be prepared or pre-processed on the basis of predictions. A set of predictions (that is, items of which it is predicted that they may be of interest to the user) may be prepared by utilizing item level user feedback. A hardware or software embodiment of the invention may comprise a predictor (that is, a prediction set generator) for this purpose. The set of predictions may be processed to yield a set of recommendations (that is, items which are recommended to a user) which is presented to the user. The set of recommendations is prepared by utilizing set level user feedback. An embodiment of the invention may comprise a recommendator (that is, a recommendation set generator) for this purpose.

The present invention yields higher user satisfaction and is therefore more efficient than Prior Art methods. Accordingly, processing time is saved when similar satisfaction levels are to be achieved, or higher user satisfaction is achieved using the same amount of processing time.

The method of the present invention can be carried out by a dedicated device or by a general purpose computer. A device according to the present invention may comprise a processor unit, a memory unit and an input/output (I/O) unit. The memory unit may store suitable data as well as a software program for carrying out the method steps of the present invention.

Determining which properties of sets of recommendations are important can be carried out in several ways.

In a first embodiment of the present invention, users are clustered on the basis of the correlation between the user satisfaction of a set and the value of several metrics which measure the properties of a set.

In a second embodiment, the properties of the sets are weighted and the respective weights are determined. These weights can be used to determine to which extent a set should have a certain property.

In a third embodiment discriminant analysis is used to distinguish the properties which contribute most to the satisfaction of a user.

The present invention is based upon the insight that user satisfaction of recommendations is not only based on the accuracy of the recommendations but also on other factors, such as diversity and novelty. The present invention benefits from the further insight that properties of recommendation sets rather than properties of individual recommendations can be used to improve recommendations.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

## Claims

1. A device for optimising a set of recommendations to at least one user, the device comprising a processing unit and a memory unit, wherein the processing unit is arranged for:
• presenting the set of recommendations to the user,
• receiving feedback on the set from the user, and
• adjusting the set by using the feedback,
wherein the set has collective properties pertaining to the set as a whole, and wherein adjusting the set involves comparing the feedback with at least two collective properties so as to determine which collective properties are important to the user.

2. The device according to claim 1, wherein the feedback comprises implicit feedback.

3. The device according to claim 1 or 2, wherein the feedback comprises explicit feedback.

4. The device according to any of the preceding claims, wherein the set is a playlist.

5. The device according to any of the preceding claims, wherein the recommendations are made to multiple users and wherein the feedback is received from multiple users.

6. The device according to any of the preceding claims, wherein the collective properties include at least one of:
• accuracy,
• novelty,
• coverage,
• serendipity,
• diversity, and
• overlap.

7. The device according to any of the preceding claims, wherein the recommendations concern audio and/or video clips, films, books, routes, CDs, DVDs, TV programs, musicals and/or plays.

8. An entertainment system, comprising a device according to any of the preceding claims.

9. The entertainment system according to claim 8, further comprising a server arranged for uploading recommended content.

10. A method of optimising a set of recommendations to at least one user, the method comprising the steps of:
• presenting the set of recommendations to the user,
• receiving feedback on the set from the user, and
• adjusting the set by using the feedback,
wherein the set has collective properties pertaining to the set as a whole, and wherein the adjusting step involves comparing the feedback with at least two collective properties so as to determine which collective properties are important to the user.

11. The method according to claim 10, wherein the feedback comprises implicit feedback.

12. The method according to claim 10 or 11, wherein the feedback comprises explicit feedback.

13. The method according to claim 10, 11 or 12, wherein the set is a playlist.

14. The method according to any of claims 10-13, wherein the recommendations are made to multiple users and wherein the feedback is received from multiple users.

15. The method according to any of claims 10-14, wherein the collective properties include at least one of:
• accuracy,
• novelty,
• coverage,
• serendipity,
• diversity, and
• overlap.

16. The method according to any of claims 10-15, wherein the recommendations concern audio and/or video clips, films, books, routes, CDs, DVDs, TV programs, musicals and/or plays.

17. A computer program product for carrying out the method according to any of claims 10-16.
